# EUROPEAN PATENT APPLICATION

(11) **EP 0 566 130 A1**
(43) Date of publication of application: **20.10.1993**
(21) Application number: 93106170.9
(22) Date of filing: 15.04.1993
(51) Int. Cl.: G01P 15/08

(54) **Rotation sensor**

(30) Priority: 17.04.1992 US 870508
(71) Applicant: Hughes Aircraft Company, Los Angeles, California 90045-0066 (US)
(72) Inventor: Reeds, John W., Thousand Oaks, CA 91360 (US)
(74) Representative: KUHNEN, WACKER & PARTNER

(57) **Abstract**

An inexpensive rotation sensor (10, 40, 50) has a cylindrical housing (12) with a cavity therein. A fluid (18) is disposed in the cavity. A sensing element (20, 42, or 52) is disposed in the cavity for sensing relative motion between the housing (12) and the fluid (18). In a first embodiment, the sensor is a piezoelectric transducer (20). In a second embodiment, the sensor is a capacitive diaphragm (42). In a third embodiment, the sensor is a strain gauge (52). In each embodiment, the rotation of the object on which the sensor (10, 40, 50) is mounted imparts rotational motion (angular acceleration) to the housing (12) of the sensor. While the housing (12) rotates immediately with the object mounted thereto, the motion of the fluid (18) lags behind, causing the sensing element (20, 42, or 52) to be deflected. Deflection of the sensing element (20, 42, or 52) is converted to an electrical signal which may be processed to determine the angular acceleration.

## Description

### Field of the Invention:

The present invention relates to motion sensors. More specifically, the present invention relates to rotation sensors.

### Description of the Related Art:

In many applications, there is a need to sense the rotation of an object or vehicle. One area of application is automotive where, for example, rotation sensing may be necessary for the development of an optimal dynamic suspension system. Another area of application may be in connection with the stabilization and guidance of low cost missiles.

Related copending application of J.G. Small, Serial Number 07/564,006, filed August 7, 1990 (PD-89452US) and assigned to the same assignee as this invention, discloses a low cost sensor which is capable of measuring rotational and linear motion. It makes use of the motion of a low viscosity fluid, such as water, in a smooth-walled container. When the container rotates, the fluid shears relative to the walls of the container. Accordingly, the sensor includes a light source and photosensor which are disposed on opposite sides of a fluid flow passageway. An optical fiber or other resilient member which variably blocks the propagation of light from the light source to the photosensor is deflected by relative fluid flow and the deflection is detected optoelectronically. The resilient member is fixedly supported at one end or edge and entrained in the fluid for varying the amount of light incident on the photosensor from the light source as a function of the amount of deflection of the resilient member caused by motion of the fluid in the passageway. This sensor appears to work very well, but requires careful alignment of the optical fiber or other resilient member with the photocells and light source during assembly and realignment over time. As conventional rotation sensors may be regarded as too expensive for many such applications and the sensor disclosed in the copending application may be regarded as difficult to assemble, there is a need for a more simple, less expensive design.

### SUMMARY OF THE INVENTION

The need in the art is addressed by the present invention which provides an inexpensive rotation sensor which is relatively easy to assemble. The invention is disclosed in several embodiments. In each a cylindrical housing is provided having a cavity therein. A fluid is disposed in the cavity. A sensor is disposed in the cavity for sensing relative motion between the housing and the fluid. In a first embodiment, the sensor is a piezoelectric transducer. In a second embodiment, the sensor is a capacitive diaphragm. In a third embodiment, the sensor is a strain gauge. In each embodiment, the rotation of the object on which the sensor is mounted imparts rotational motion (angular acceleration) to the housing of the sensor. While the housing rotates immediately, the fluid motion lags behind the housing motion causing the sensing element to be deflected. Deflection of the sensing element is converted to an electrical signal which may be processed to determine the angular acceleration.

### BRIEF DESCRIPTION OF THE DRAWINGS

Fig. 1 is a sectional end view of a first embodiment of a rotation sensor constructed in accordance with the present teachings.

Fig. 2 is a sectional end view of a second embodiment of the rotation sensor of the present invention comprising a capacitive diaphragm sensing mechanism.

Fig. 3 is a sectional end view of a third embodiment of the rotation sensor of the present invention comprising a strain gauge sensing mechanism.

Fig. 4 is a sectional side view of the third embodiment of the rotation sensor of Fig. 3 taken along the line 4-4 thereof.

Fig. 5 is a sectional end view of the third embodiment of the rotation sensor of the present invention showing the strain gauge responding to dynamic forces applied thereto by fluid within the cavity of the sensor as the sensor undergoes rotation.

### DESCRIPTION OF THE INVENTION

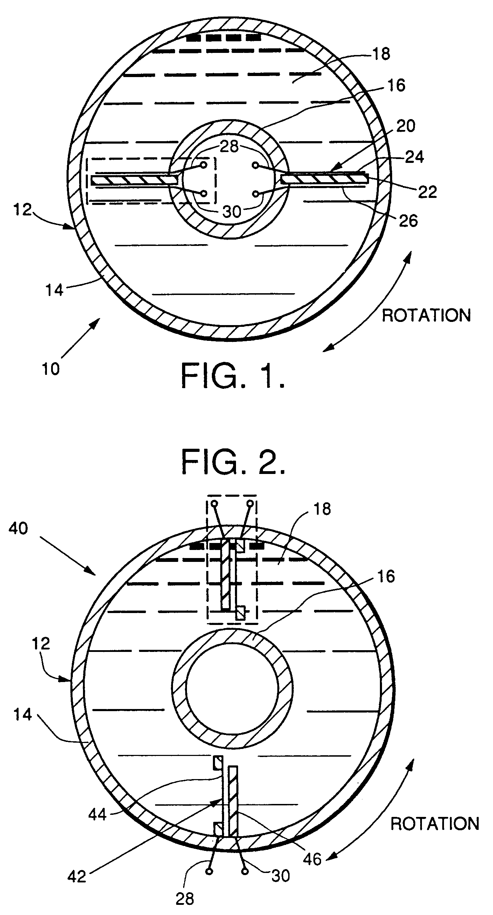

Fig. 1 is a sectional end view of a first illustrative embodiment of a rotation sensor 10 constructed in accordance with the present teachings. The sensor 10 includes a metallic or plastic donut-shaped cylindrical housing 12 having an outer wall 14 and an inner wall 16. A cavity is provided between the inner and outer walls 16 and 14 which is filled with an insulating fluid 18 such as 3M Fluoronert FC-77. A piezoelectric transducer 20 is cantilevered into the fluid 18. The transducer 20 includes strip of piezoelectric film 22 sandwiched between two electrodes 24 and 26. The piezoelectric film may be Pennwalt "Kynar" or other suitable piezoelectric material. The Pennwalt KYNAR piezoelectric film is a polarized plastic material, for example, 0.005 inches thick, which is metalized on two opposing sides with aluminum as electrodes 24 and 26. The piezoelectric film is not sensitive to linear motion, but deflects in response to rotational motion. Two wires 28 and 30 extend through the inner wall 16 and are connected the first and second electrodes 24 and 26, respectively, and facilitate electrical connection thereto from which an output may be taken.

The rotation sensor 10 is conveniently mounted on a vehicle or object to sense rotation thereof by mechanically fixturing the sensor or with an appropriate adhesive. As the vehicle rotates, the rotational motion is transferred to the rotation sensor 10. The housing 12 rotates with the object or vehicle and the fluid inside the housing 12 starts to move thereafter and at a slower rate initially, resulting in relative motion therebetween. The relative motion between the fluid and the housing 12 is effective to bend the piezoelectric transducer 20. The transducer provides a high voltage low current output signal in response to the angular acceleration associated with the rotation of the vehicle. The electrical signal is processed by an electrical circuit (not shown) which would include an amplifier and a meter or other instrument to indicate the degree of angular acceleration.

Fig. 2 is a sectional end view of a second embodiment of a rotation sensor 40 of the present invention comprising a diaphragm 42 sensing mechanism. Components of sensor 40 which are similar to the first embodiment in Figure 1 will have the same reference numerals. The diaphragm 42 is mounted within the cavity to the outer wall 14 of the sensor 40. The diaphragm 42 includes a flexible capacitor membrane 44 mounted in parallel face-to-face relation to a rigid capacitor plate 46. The membrane 44 may be made of Kapton, or other suitable material, with a metalized or conductive coating on the surface facing the plate 46. The plate 46 may be a single piece of conductive material, e.g., metal. The membrane 44 has a thin middle portion 44a to facilitate the flexibility thereof. The flexible membrane 44 extends beyond the end of the rigid capacitor plate 46 into the cavity such that it bends in response to the motion of the fluid relative to the housing 12 in either direction. As the flexible membrane 44 moves toward and away from the rigid capacitor plate 46, the capacitance of the diaphragm 42 changes accordingly. With this embodiment, detection of rotation is effected by a suitable circuit, i.e., one including a capacitive bridge, not shown in Figure 2, but connected to wires 28 and 30.

As illustrated in Figures 1 and 2, the transducer 20 and diaphragm 42 sensing elements of the first and second embodiments are mounted to cantilever into the fluid 18 from inner wall 16 and outer wall 14, respectively. According to the Invention, the sensing element may be mounted to either wall 16 or 14 or both walls and still be within the scope of the invention. Moreover, the rotation sensors 10 and 40 of the first and second embodiments are operable with one sensing element (20 and 42) or at least two of the same sensing elements. Figures 1 and 2 illustrate preferred first and second embodiments of sensors 10 and 40. In each of Figures 1 and 2, one of the preferred embodiment comprises at least two oppositely located sensing elements (either two transducers 20 or two diaphragms 42) and the other preferred embodiment comprises one sensing element (20 or 42). The dashed line around one of the sensing elements in both Figures 1 and 2 indicates that one element may not be present. One sensing element (20 or 42) provides a sufficient signal (either a piexoelectric response or change in capacitance) to wires 28 and 30, according to the invention, but may include some noise. Two sensing elements (20 or 42) increase the signal and essentially cancel out the noise. More than two sensing elements (20 or 42) will improve the signal to noise ratio by the square root of the number of elements, but at the expense of increased complexity and cost. The invention is not intended to be limited to the number of sensing elements illustrated in the Figures 1.

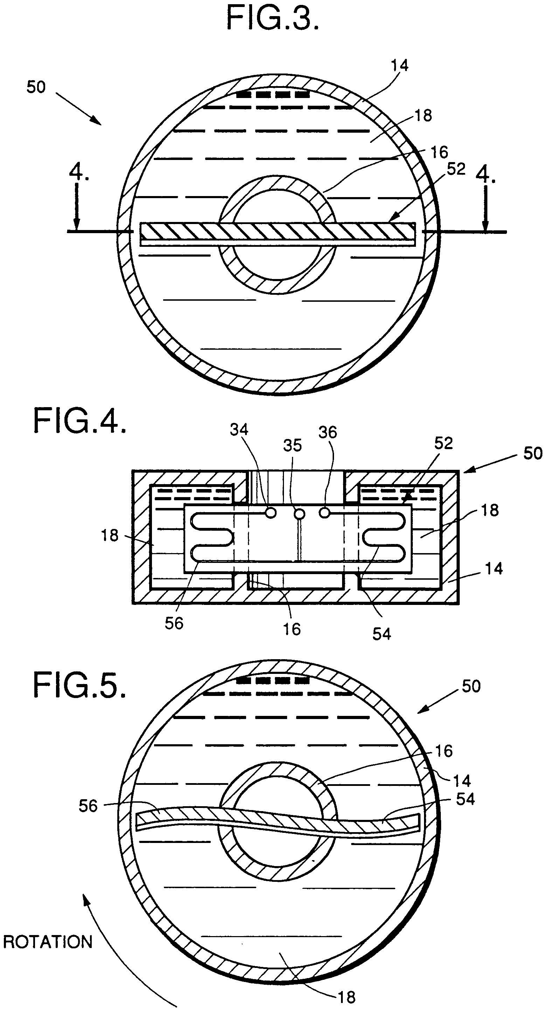

Fig. 3 is a sectional end view of a third alternative embodiment 50 of the rotation sensor of the present invention comprising a strain gauge 52. For simplicity, all other components which are similar to the first embodiment have the same reference numerals. The strain gauge 52 is fastened to the inner wall 16 of the cavity with an adhesive, for example a five minute epoxy. The strain gauge 52 is implemented with a metal foil mesh or serpentine pattern of conductive elements on a flexible backing of, for example, 0.005 inch polyamide (Kapton). Optimum thickness of the backing will be determined by mechanical design of the sensor 50 and by desired performance characteristics. In all embodiments disclosed herein, the sensing element should be stable over time.

Fig. 4 is a sectional side view of the third embodiment of the rotation sensor of Fig. 3 taken along the line 4-4 thereof. As illustrated in the sectional side view of Fig. 4, in the preferred implementation, the strain gauge 52 has dual active elements 54 and 56 made of a conductive metal disposed in linear relation on the common backing. The dual active elements 54 and 56 are interconnected at a point where node 35 extends therefrom and each element (54 and 56) terminates in a node (34 and 36, respectively). The nodes are connected to an electrical circuit not shown in the Figures, for example, a Wheatstone bridge, for measuring resistive changes in elements 54 and 56.

Fig. 5 is a sectional end view of the third embodiment of the rotation sensor 50 of the present invention showing the strain gauge 52 responding to dynamic forces applied thereto by fluid within the cavity of the sensor as the sensor undergoes rotation. As the sensor 50 rotates, the fluid 18 moves within the cavity and one of the elements 56 moves in one direction while the other of the elements 54 moves in the opposite direction, for example, as illustrated in Figure 5. This causes the resistance of element 56 to decrease due to the compression thereof while that of the element 54 to increase due to tension. This resistive imbalance is sensed by an appropriate electrical circuit, i.e., one including a Wheatstone bridge, via connections to three nodes 34, 35 and 36, at the ends of the active elements 54 and 56, by the wires shown in Fig. 4.

Thus, while the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

It is therefore intended by the appended claims to cover any and all such applications, modifications and embodiments within the scope of the present invention.

## Claims

1. A rotation sensor comprising:
a cylindrical housing having a cavity therein and being mountable on a rotatable object;
a fluid disposed in said cavity; and
a piezoelectric transducer mounted to extend into said cavity and fluid, wherein rotation of said object imparts relative rotational motion between said housing and said fluid, said relative motion deflecting said piezoelectric transducer in proportion to the rotation of said object.

2. The rotation sensor of Claim 1, wherein said piezoelectric transducer comprises;
a piezoelectric disposed on opposite sides of said piezoelectric material, and
wherein said piezoelectric transducer produces a piezoelectric response to being deflected.

3. The rotation sensor of Claim 1, wherein said piezoelectric transducer comprises at least two transducer elements oppositely disposed in said housing, each comprising a piezoelectric material and a pair of electrodes disposed on opposite sides of said piezoelectric material.

4. A rotation sensor comprising:
a cylindrical housing having a cavity therein and being mountable on a rotatable object;
a fluid disposed in said cavity; and
a capacitive diaphragm mounted to extend into said cavity and said fluid, wherein rotation of said object imparts relative rotational motion between said housing and said fluid, said relative motion deflecting said capacitive diaphragm in proportion to the rotation of said object.

5. The rotation sensor of Claim 4, wherein said capacitive diaphragm comprises:
a flexible membrane having a conductive coating on one side thereof; and
a rigid plate disposed parallel to said flexible membrane on said coated side thereof the membrane extending beyond said rigid plate, and
wherein said relative rotational motion deflects said flexible membrane in a direction either toward or away from said plate, thereby changing the capacitance of said diaphragm.

6. The rotation sensor of Claim 4, wherein said capacitive diaphragm comprises at least two capacitive elements oppositely disposed in said housing, each comprising a flexible membrane having a conductive coating on one side thereof and a rigid plate disposed parallel to said flexible membrane on said coated side.

7. A rotation sensor comprising:
a cylindrical housing having a cavity therein and being mountable on a rotatable object; and
a strain gauge mounted to extend into said cavity and said fluid, wherein rotation of said object imparts relative rotational motion between said housing and said fluid, said relative motion deflecting said strain gauge in proportion to the rotation of said object.

8. The rotation sensor of Claim 7, wherein said strain gauge comprises:
a flexible backing; and
a conductive element on one side of said flexible backing, and wherein said strain gauge is mounted in said housing with opposite ends of said strain gauge extending into said cavity and said fluid so that said relative rotational motion deflects one end of said strain gauge into compression and the opposite end into tension, thereby changing resistance of the conductive element.

9. The rotation sensor of Claim 7, wherein said strain gauge comprises dual active elements oppositely disposed in said housing, each comprising a flexible backing and a conductive element on one side of said flexible backing.
